Europäisches Patentamt

(19) European Patent Office

Office européen des brevets

(11) Veröffentlichungsnummer : **0 040 329**
**B1**

(12) **EUROPÄISCHE PATENTSCHRIFT**

(45) Veröffentlichungstag der Patentschrift :
01.06.83

(21) Anmeldenummer : 81102998.2

(22) Anmeldetag : 18.04.81

(51) Int. Cl.³ : **E 06 B 9/24**, B 32 B 5/28, D 06 M 15/38

(54) Schwerentflammbares Sonnenschutzrollo.

(30) Priorität : 26.04.80 DE 3016191

(43) Veröffentlichungstag der Anmeldung :
25.11.81 Patentblatt 81/47

(45) Bekanntmachung des Hinweises auf die Patenterteilung : 01.06.83 Patentblatt 83/22

(84) Benannte Vertragsstaaten :
AT BE FR GB IT NL SE

(56) Entgegenhaltungen :
DE A 1 921 008
GB A 1 100 196
GB A 1 326 331
US A 3 736 220
AMERICAN DYESTUFF REPORTER, 25, Dezember 1961 A.C. NUESSLE et al. « Reactive acrylics - a new type of textile finishing material » Seite 13 (1007) - 21 (1015)

(73) Patentinhaber : **Konrad Hornschuch Aktiengesellschaft**

**D-7119 Weissbach (DE)**

(72) Erfinder : **Hellwig, Manfred**
**Alemannenstrasse 49**
**D-7110 Öhringen (DE)**

(74) Vertreter : **Bunke, Max, Dipl.-Ing. et al**
**Patentanwälte Prinz, Bunke & Partner Lessingstrasse 9**
**D-7000 Stuttgart 1 (DE)**

Schwerentflammbares Sonnenschutzrollo

Die Erfindung betrifft ein schwerentflammbares Sonnenschutzrollo aus einem mit flammhemmend modifiziertem Kunststoff beschichteten textilen Träger.

Es sind unzählige Arten von Sonnenschutzrollos bekannt, bei denen ein textiler Träger, meist ein Gewebe, mit Polyvinylchlorid (PVC), mit Polyacrylat-Kunststoffen oder mit Cellulosenitraten (z. B. Collodiumwolle) beschichtet ist. Diese bekannten Sonnenschutzrollos sind jedoch in aller Regel nicht flammhemmend ausgerüstet, weil der Zusatz von Flammschutzmitteln in aller Regel die Haftung der Kunststoffschicht auf dem textilen Träger verschlechtert.

Es ist jedoch auch ein flammhemmend ausgerüstetes Sonnenschutzrollo der eingangs genannten Gattung bekannt geworden, das aus einem mit PVC beschichteten textilen Träger aus natürlichen Fasern besteht, wobei das PVC durch Zusatz bekannter Flammschutzmittel, wie Antimontrioxid oder Chlorparaffin, oder durch Copolymerisation mit Halogen- oder Phosphorverbindungen flammhemmend modifiziert ist.

Der entscheidende Nachteil dieses schwerentflammbaren Sonnenschutzrollos besteht darin, daß die Beschichtung auf Basis von PVC, also eines halogenhaltigen Polymeren, aufgebaut ist und daß darüberhinaus auch die zugesetzten Flammschutzmittel meist Halogenverbindungen sind. Im Brandfalle, also unter Einwirkung großer Hitze, setzt sowohl das verschwelende oder abschmelzende PVC als auch die jeweils als Flammschutzmittel zugesetzte Halogenverbindung gasförmigen Halogenwasserstoff, meist Chlorwasserstoff und Bromwasserstoff, frei. Die freiwerdenden Halogenwasserstoffe sind äußerst giftig ; die maximale Arbeitsplatzkonzentration von Chlorwasserstoff ($MAK_{HCl}$) beträgt beispielsweise nur 5 ppm. Die freiwerdenden Halogenwasserstoffgase stellen somit im Brandfalle eine erhebliche Gefahr für den Menschen und die Umwelt dar.

Der Erfindung liegt die Aufgabe zugrunde, ein schwerentflammbares Sonnenschutzrollo der eingangs genannten Gattung zu schaffen, bei dem die Kunststoffbeschichtung zwar einen Zusatz an Flammschutzmittel enthält, bei dem aber die Haftung der Kunststoffschicht auf dem textilen Träger nicht herabgesetzt ist, bei dem im Brandfalle die Abspaltung von Halogenwasserstoff ausgeschlossen ist und das darüber hinaus licht- und wärmestabil ist, eine möglichst textile Oberfläche besitzt und verschweißbar ist.

Diese Aufgabe wird gemäß der Erfindung dadurch gelöst, daß der textile Träger mit zwei verschiedenen Schichten aus flexiblem halogenfreiem Kunststoff imprägniert ist, nämlich mit einer ersten Schicht aus duroplastischem Kunststoff und mit einer zweiten, die erste Schicht und damit auch die Fäden bzw. Fasern des textilen Trägers vollständig ummantelnden Schicht aus thermoplastischem Kunststoff, und daß beide Kunststoffschichten mindestens ein halogenfreies Flammschutzmittel enthalten.

Gemäß einem vorteilhaften Ausführungsbeispiel der Erfindung besteht sowohl die duroplastische als auch die thermoplastische Kunststoffschicht, mit denen der textile Träger imprägniert ist, aus gegebenenfalls Acrylsäure und/oder Methacrylsäure enthaltenden Copolymeren von Niedrigalkylestern der Acrylsäure und Methacrylsäure, wobei die Alkylgruppen der Ester geradkettig oder verzweigt sind und 1 bis 5 C-Atome aufweisen und wobei die duroplastischen Copolymere selbstvernetzend sind.

Bei einer bevorzugten Ausführungsform des erfindungsgemäßen schwerentflammbaren Sonnenschutzrollos ist der textile Träger mit einer Schicht aus duroplastischen, gegebenenfalls Acrylsäure und/oder Methacrylsäure enthaltenden Äthylacrylat-Methylmethacrylat-Copolymeren und mit einer Schicht aus thermoplastischen, gegebenenfalls Acrylsäure und/oder Methacrylsäure enthaltenden Methylmethacrylat-Butylacrylat-Copolymeren imprägniert.

Die beiden Schichten aus duroplastischem und thermoplastischem Kunststoff enthalten vorzugsweise eine Metaphosphonsäure oder das Ammoniumsalz einer solchen Metaphosphonsäure als Flammschutzmittel.

Eine besonders gute Haftung zwischen den Fasern bzw. Fäden des textilen Trägers und der halogenfreien Kunststoffbeschichtung wird erfindungsgemäß dadurch erzielt, daß das Gewichtsverhältnis von duroplastischem Kunststoff und Flammschutzmittel 1 : 1 bis 1,5 : 1 und das Gewichtsverhältnis von thermoplastischem Kunststoff und Flammschutzmittel — jeweils in der Trockenmasse — 4 : 1 bis 5 : 1 beträgt, sowie dadurch, daß das Gewichtsverhältnis zwischen thermoplastischem und duroplastischem Kunststoff 1,6 : 1 bis 7 : 1 beträgt.

Obwohl das bevorzugt verwendete duroplastische Acrylat-Copolymere selbstvernetzend ist, kann die Verwendung eines zusätzlichen Vernetzungskatalysators vorteilhaft sein.

Schließlich kann mindestens eine der beiden Kunststoffschichten ein Biozid enthalten, beispielsweise ein Fungizid wie etwa Pentachlorphenol oder dessen Natriumsalz.

Der textile Träger des erfindungsgemäßen Sonnenschutzrollos kann ein Gewebe, Gestrick, Vlies oder auch ein Fadenlagen-Nähgewirk aus natürlichen oder synthetischen Fasern oder aus Gemischen von natürlichen und synthetischen Fasern sein ; bevorzugt wird jedoch ein zu 100 % aus flammfest ausgerüsteten Polyestergarnen — beispielsweise auf Basis von Polyäthylen-terephthalat — hergestelltes Gewebe oder ein Gewebe aus flammfest modifizierten Polyacrylfasern.

Unter « flammfesten » Geweben bzw. Testilien werden solche verstanden, die den Anforderungen und Eigenschaften für schwerentflammbare Baustoffe der Baustoffklasse B1 der DIN-Norm 4102 entsprechen.

Das erfindungsgemäße Sonnenschutzrollo ist schwerentflammbar im Sinne der DIN-Norm 4102, halogenfrei, spaltet also im Brandfalle keine Halogenwasserstoffe ab, und ist weiter licht- und wärmestabil, weist eine Oberfläche mit weitgehend textilem Griff und textilem Aussehen auf, liegt absolut plan, ist aber dennoch so flexibel, daß es leicht aufgerollt werden kann, ohne daß die mechanischen Eigenschaften darunter leiden würden, ist gut verschweißbar und kann nicht nur als dekoratives Sonnenschutzrollo verwendet werden, sondern auch als Raumteiler, Sichtblende und Wandverkleidung.

Das erfindungsgemäße Sonnenschutzrollo kann dadurch hergestellt werden, daß

a) der gegebenenfalls bereits flammfest ausgerüstete textile Träger thermofixiert wird, wobei die bei der Faserherstellung, beim Spinnen und beim Weben bzw. Wirken entstandenen äußeren und intermolekularen Spannungen durch eine Wärmebehandlung aufgehoben werden,

b) wonach der textile Träger mit einer ein halogenfreies Flammschutzmittel, Emulgatoren und gegebenenfalls Biozide und Katalysatoren enthaltenden Dispersion eines duroplastischen, halogenfreien Kunststoffs in einem geeigneten Lösungsmittel in einem ersten Tauchbad imprägniert wird,

c) danach im Trockenkanal getrocknet und der textile Träger somit formstabilisiert und schiebefest gemacht wird,

d) daß der so imprägnierte Träger anschließend durch eine zweite, ein halogenfreies Flammschutzmittel, Emulgatoren und gegebenenfalls Biozide und Katalysatoren enthaltende Dispersion eines thermoplastischen halogenfreien Kunststoffs in einem geeigneten Lösungsmittel getaucht wird,

e) wonach schließlich überschüssiges Beschichtungsmaterial abgerakelt und das Sonnenschutzrollo erneut im Trockenkanal getrocknet wird.

Vorzugsweise wird der textile Träger im ersten Tauchbad mit 20 bis 80 g/m², im zweiten Tauchbad mit 100 bis 130 g/m² beschichtet.

Da die in den Kunststoffdispersionen enthaltenen Emulgatoren meist schon antibakteriell wirksam sind, kann auf den Zusatz besonderer Biozide häufig verzichtet werden. Wenn die Sonnenschutzrollos aber in Feucht- oder Naßräumen oder im Freien verwendet werden sollen, kann zusätzlich ein Biozid, beispielsweise ein Fungizid wie Pentachlorphenol, zugesetzt werden.

## Ansprüche

1. Schwerentflammbares Sonnenschutzrollo aus einem mit flammhemmend modifiziertem Kunststoff beschichteten textilen Träger, dadurch gekennzeichnet, daß der textile Träger mit zwei verschiedenen Schichten aus flexiblem halogenfreiem Kunststoff imprägniert ist, nämlich mit einer ersten Schicht aus duroplastischem Kunststoff und mit einer zweiten, die erste Schicht und damit auch die Fäden bzw. Fasern des textilen Trägers vollständig ummantelnden Schicht aus thermoplastischem Kunststoff, und daß beide Kunststoffschichten mindestens ein halogenfreies Flammschutzmittel enthalten.

2. Sonnenschutzrollo nach Anspruch 1, dadurch gekennzeichnet, daß sowohl die duroplastische als auch die thermoplastische Kunststoffschicht, mit denen der textile Träger imprägniert ist, aus gegebenenfalls Acrylsäure und/oder Methacrylsäure enthaltenden Copolymeren von Niedrigalkylestern der Acrylsäure und Methacrylsäure besteht, wobei die Alkylgruppen der Ester geradkettig oder verzweigt sind und 1 bis 5 C-Atome aufweisen.

3. Sonnenschutzrollo nach Anspruch 2, dadurch gekennzeichnet, daß der textile Träger mit einer Schicht aus duroplastischen, gegebenenfalls Acrylsäure und/oder Methacrylsäure enthaltenden Äthylacrylat-Methylmethacrylat-Copolymeren und mit einer Schicht aus thermoplastischen, gegebenenfalls Acrylsäure und/oder Methacrylsäure enthaltenden Methylmethacrylat-Butylacrylat-Copolymeren imprägniert ist.

4. Sonnenschutzrollo nach einem der Ansprüche 1 bis 3, dadurch gekennzeichnet, daß das Flammschutzmittel eine Metaphosphonsäure oder deren Ammoniumsalz ist.

5. Sonnenschutzrollo nach einem der Ansprüche 1 bis 4, dadurch gekennzeichnet, daß das Gewichtsverhältnis von duroplastischem Kunststoff und Flammschutzmittel 1 : 1 bis 1,5 : 1 und das Gewichtsverhältnis von thermoplastischem Kunststoff und Flammschutzmittel — jeweils in der Trockenmasse — 4 : 1 bis 5 : 1 beträgt.

6. Sonnenschutzrollo nach einem der Ansprüche 1 bis 5, dadurch gekennzeichnet, daß das Gewichtsverhältnis zwischen thermoplastischem und duroplastischem Kunststoff 1,6 : 1 bis 7 : 1 beträgt.

7. Sonnenschutzrollo nach einem der Ansprüche 1 bis 6, dadurch gekennzeichnet, daß die erste der beiden Kunststoffschichten einen Vernetzungskatalysator enthält.

8. Sonnenschutzrollo nach einem der Ansprüche 1 bis 7, dadurch gekennzeichnet, daß mindestens eine der beiden Kunststoffschichten ein Biozid enthält.

9. Sonnenschutzrollo nach einem der Ansprüche 1 bis 8, dadurch gekennzeichnet, daß der textile Träger ein zu 100 % aus flammfest ausgerüsteten Polyestergarnen hergestelltes Gewebe ist.

10. Verfahren zur Herstellung des Sonnenschutzrollos gemäß einem der Ansprüche 1 bis 9, dadurch gekennzeichnet, daß

a) der gegebenenfalls bereits flammfest ausgerüstete textile Träger thermofixiert und

b) anschließend mit einer ein halogenfreies Flammschutzmittel, Emulgatoren und gegebenenfalls Biozide und Katalysatoren enthaltenden Dispersion eines duroplastischen halogenfreien Kunststoffs in einem geeigneten Lösungsmittel in einem ersten Tauchbad imprägniert wird,

c) danach im Trockenkanal getrocknet und damit schiebefest gemacht wird,

d) anschließend durch eine zweiten, ein halogenfreies Flammschutzmittel, Emulgatoren und gegebenenfalls Biozide und Katalysatoren enthaltende Dispersion eines thermoplastischen halogenfreien Kunststoffs in einem geeigneten Lösungsmittel getaucht wird,

e) wonach überschüssiges Beschichtungsmaterial abgerakelt und erneut im Trockenkanal getrocknet wird.

11. Verfahren nach Anspruch 10, dadurch gekennzeichnet, daß der textile Träger im ersten Tauchbad mit 20 bis 80 g/m², im zweiten Tauchbad mit 100 bis 130 g/m² beschichtet wird.

### Claims

1. Hardly inflammable sun-shade roller blind having a supporting textile substrate coated with synthetic resin modified so as to be flame resistant, characterized in that the supporting textile substrate being impregnated with two different layers of flexible synthetic resin free of halogen, namely, with a first layer of thermosetting synthetic resin and with a second layer, completely enveloping the first layer and thus also the threads or fibers of the supporting textile substrate, of thermoplastic synthetic resin, and in that both of the synthetic resin layers contain at least one halogen-freee flame-protection agent.

2. Sun-shade roller blind according to claim 1, characterized in that not only the thermosetting but also the thermoplastic synthetic resin layer, with wich the supporting textile substrate is impregnated, consists of copolymers of lower alkyl esters of acrylic acid and methacrylic acid optionally containing acrylic acid and/or methacrylic acid, the alkyl groups of the esters being straightchained or blanched and having 1 to 5 C-atoms.

3. Sun-shade roller blind according to claim 2, characterized in that the supporting textile substrate is impregnated with a layer of thermosetting copolymers of ethyl acrylate and methyl methacrylate optionally containing acrylic acid and/or methacrylic acid, and with a layer of thermoplastic copolymers of methyl methacrylate and butyl acrylate optionally containing acrylic acid and/or methacrylic acid.

4. Sun-shade roller blind according to one of the claims 1 to 3, characterized in that the flame-protection agent is a metaphosphonic acid or its ammonium salt.

5. Sun-shade roller blind according to one of the claims 1 to 4, characterized in that the weight ratio of thermosetting synthetic resin and flame-protection agent amounts to 1 : 1 to 1.5 : 1 and the weight ratio of thermoplastic synthetic resin and flame-protection agent — in each case in the dry mass — amounts to 4 : 1 to 5 : 1.

6. Sun-shade roller blind according to one of the claims 1 to 5, characterized in that the weight ratio between thermoplastic and thermosetting synthetic resin amounts to 1.6 : 1 to 7 : 1.

7. Sun-shade roller blind according to one of the claims 1 to 6, characterized in that the first one of the two synthetic resin layers contains a cross-linking catalyst.

8. Sun-shade roller blind according to one of the claims 1 to 7, characterized in that at least one of the two synthetic resin layers contains a biocide.

9. Sun-shade roller blind according to one of the claims 1 to 8, characterized in that the supporting textile substrate is a web made 100 % of polyesters yarns finished so as to be flameproof.

10. Process for the production of the sun-shade roller blind of one of the claims 1 to 9, characterized in that

a) the supporting textile substrate which optionally is already finished so as to be flameproof, is thermofixed and,

b) subsquently, is impregnated in a first immersion bath with a dispersion of a halogen-free thermosetting synthetic resin in a suitable solvent, said dispersion containing a halogen-free flame-protection agent, emulsifiers, as well as optionally biocides and catalysts,

c) whereafter it is dried in a drying tunnel and thus is rendered non-slipping,

d) and, subsquently, is dipped into a second dispersion of a halogen-free thermoplastic synthetic resin in a suitable solvent, said second dispersion containing a halogen-free flame-protection agent, emulsifiers, as well as optionally biocides and catalysts,

e) whereafter excess coating material is raked off, and one dries again in the drying tunnel.

11. Process according to claim 10, characterized in that the supporting textile substrate is coated in the first immersion bath with 20 to 80 g/m², in the second immersion bath with 100 to 130 g/m².

### Revendications

1. Store roulant anti-solaire difficilement inflammable comportant un support textile revêtu d'une matière synthétique modifiée de manière à être rendue ignifuge, caractérisé en ce que le support textile est imprégné de deux couches différentes de matière synthétique flexible exemple d'halogène, à savoir d'une première couche d'une matière synthétique thermodurcissable et d'une seconde couche d'une matière synthétique thermoplastique, enrobant complètement la première couche et de ce fait, également les fils ou fibres du support textile, et en ce que les deux couches de matière synthétique contiennent au moins un agent ignifugeant exempt d'halogène.

2. Store roulant anti-solaire suivant la revendication 1, caractérisé en ce que tant la couche de matière synthétique thermodurcissable que celle de matière synthétique thermoplastique imprégnant le support textile, sont constituées par des copolymères d'esters d'alcoyle inférieurs de l'acide acrylique et de l'acide méthacrylique et contenant le cas échéant de l'acide acrylique et/ou de l'acide méthacrylique, les groupes d'alcoyle des esters présentant une chaîne droite ou ramifiée et 1 à 5 atomes de carbone.

3. Store roulant anti-solaire suivant la revendication 2, caractérisé en ce que le support textile est imprégné d'une couche constitue par des copolymères thermodurcissables d'acrylate d'éthyle et de méthacrylate de méthyle contenant le cas échéant de l'acide acrylique et/ou de l'acide méthacrylique, ainsi que d'une couche constituée par des copolymères thermoplastiques de méthacrylate de méthyle et d'acrylate de butyle, contenant le cas échéant de l'acide acrylique et/ou de l'acide méthacrylique.

4. Store roulant anti-solaire suivant l'une des revendications 1 à 3, caractérisé en ce que l'agent ignifugeant est un acide métaphosphonique ou son sel d'ammonium.

5. Store roulant anti-solaire suivant l'une des revendications 1 à 4, caractérisé en ce que le rapport de poids entre la matière synthétique thermodurcissable et l'agent ignifugeant est de 1 : 1 à 1,5 : 1, et en ce que le rapport de poids entre la matière synthétique thermoplastique et l'agent ignifugeant est de 4 : 1 à 5 : 1, pour chaque cas dans le poids à sec.

6. Store roulant anti-solaire suivant l'une des revendications 1 à 5, caractérisé en ce que le rapport de poids entre la matière synthétique thermoplastique et la matière thermodurcissable est de 1,6 : 1 à 7 : 1.

7. Store roulant anti-solaire suivant l'une des revendications 1 à 6, caractérisé en ce que la première des deux couches en matière synthétique contient un catalyseur de réticulation.

8. Store roulant anti-solaire suivant l'une des revendications 1 à 7, caractérisé en ce qu'au moins l'une des deux couches de matière synthétique contient un biocide.

9. Store roulant anti-solaire suivant l'une des revendications 1 à 8, caractérisé en ce que le support textile est un tissu fabriqué à 100 % à partir de fils de polyester rendus ignifuges.

10. Procédé de fabrication d'un store roulant anti-solaire suivant l'une des revendications 1 à 9, caractérisé en ce que :

a) le support textile rendu éventuellement déjà ignifuge est thermofixé et

b) est ensuite imprégné dans un premier bain d'immersion d'une dispersion d'une matière synthétique thermodurcissable et exempte d'halogène dans un solvant approprié, cette dispersion contenant un agent ignifugeant exempt d'halogène, des émulsionnants et éventuellement, des biocides et des catalyseurs,

c) ensuite séché dans un canal de séchage et rendu de ce fait résistant au coulissement,

d) ensuite plongé dans une seconde dispersion d'une matière synthétique thermoplastique exempte d'halogène dans un solvant approprié, cette dispersion contenant un agent ignifugeant exempt d'halogène, des émulsionnants et éventuellement, des biocides et des catalyseurs,

e) la matière de revêtement superflue étant ensuite enlevée par raclage et l'on sèche à nouveau dans le canal de séchage.

11. Procédé suivant la revendication 10, caractérisé en ce que le support textile est recouvert dans le premier bain d'immersion, d'une couche à raison de 20 à 80 g/m², et dans le second bain d'immersion, d'une couche à raison de 100 à 130 g/m².